(19) Europäisches Patentamt
European Patent Office
Office européen des brevets

(11) EP 2 231 531 B1

(12) **EUROPEAN PATENT SPECIFICATION**

(45) Date of publication and mention of the grant of the patent:
**04.04.2012 Bulletin 2012/14**

(21) Application number: **08862833.4**

(22) Date of filing: **02.12.2008**

(51) Int Cl.:
***C02F 5/14*** *(2006.01)* ***C11D 3/10*** *(2006.01)*
***C11D 3/12*** *(2006.01)* ***C11D 3/33*** *(2006.01)*
***C11D 3/36*** *(2006.01)* ***C11D 7/12*** *(2006.01)*
***C11D 7/32*** *(2006.01)* ***C11D 7/36*** *(2006.01)*
***C02F 1/52*** *(2006.01)* ***C02F 1/68*** *(2006.01)*
***C02F 5/10*** *(2006.01)* ***C02F 5/12*** *(2006.01)*

(86) International application number:
**PCT/EP2008/066626**

(87) International publication number:
**WO 2009/077327 (25.06.2009 Gazette 2009/26)**

(54) **Builder system for a detergent composition**

Buildersystem für Waschmittel

Système builder pour compositions détergentes

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.12.2007 IN MU24582007**
**13.03.2008 EP 08152685**

(43) Date of publication of application:
**29.09.2010 Bulletin 2010/39**

(73) Proprietors:
- **Unilever N.V.**
**3013 AL Rotterdam (NL)**
Designated Contracting States:
**AT BE BG CH CZ DE DK EE ES FI FR GR HR HU IS IT LI LT LU LV MC NL NO PL PT RO SE SI SK TR**
- **Unilever PLC**
**London, Greater London EC4Y 0DY (GB)**
Designated Contracting States:
**CY GB IE MT**

(72) Inventors:
- **BANDYOPADHYAY, Sayan**
**Bangalore 560 066 (IN)**
- **DAS, Subir, Kumar**
**Bangalore 560 066 (IN)**
- **SARKAR, Arpita**
**Bangalore 560 066 (IN)**

(74) Representative: **Reijns, Tiemen Geert Pieter**
**Unilever Patent Group**
**Olivier van Noortstraat 120**
**3133 AT Vlaardingen (NL)**

(56) References cited:
**WO-A-93/22411** **WO-A-98/40457**
**CA-A- 979 772**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The invention relates to a method for softening of hard water. The invention more particularly relates to a more efficient method for building of hard water for cleaning applications and to a builder composition for incorporation in a detergent composition. The invention also relates to a solid detergent composition comprising the builder composition of the invention which provides for better detergency especially when soiled fabrics are washed in hard water.

### BACKGROUND AND PRIOR ART

The invention relates to softening of hard water. This invention can be used for any application where soft water is desired but is particularly applicable in softening water for washing laundry, where the softening is called building. Soaps, which are alkali metal salts of fatty acids have been used for washing laundry. When washing laundry with soaps, the efficiency of washing is lower when washed in hard water i.e. water having high levels of dissolved calcium and magnesium salts. The dissolved calcium and magnesium ions react very quickly with the alkali metal cation (sodium or potassium) of the soap leading to formation of calcium and magnesium soap which is insoluble in water and therefore washing in hard water gives poor cleaning. With the advent of synthetic detergents which are alkali metal salts of long chain synthetic acids of petroleum origin, the same problem persists. Popular synthetic detergents are linear alkyl benzene sulphonates, alpha olefin sulphonates, and primary alkyl sulphates which belong to the class of anionic surfactants. Surfactants of the non-ionic, cationic, amphoteric and zwitterionic character are also known. Soiled laundry when washed with synthetic surfactants in hard water also gives poor cleaning as compared to cleaning with softer water.

Compounds that react preferentially with the dissolved calcium and magnesium ions present in hard water, known as detergency builders, have been used in detergent compositions. Commonly known detergency builders are alkali metal carbonates, silicates, phosphates and structured compounds like zeolites. Sodium carbonate also known as soda ash is an inexpensive and widely used builder in detergent formulations. Premium detergents use builders like phosphates and/or zeolites since they have better building properties but are more expensive. There has been continuous work to develop more and more efficient and faster building systems using less expensive materials. Further, use of phosphates in detergents is believed by many to be responsible for the eutrophication of river and other natural waters systems. Thus a lot of effort has been put into developing faster and/or more efficient building systems using sodium carbonate as the main raw material.

US5496376 (Church & Dwight, 1996) discloses a laundry detergent composition wherein the solids content comprises an active surfactant, at least 70 wt% of a water soluble alkali carbonate, e.g., sodium carbonate, and, a minor amount, for example, about 0.05 to 5 wt. % of a polymeric polycarboxylate, e.g. an acrylic acid polymer, based on the total weight of solids in the composition, the polymeric polycarboxylate being in a form such that its complete release into the wash water is delayed to at least about 60 seconds after the complete dissolution of the alkaline carbonate. The building provided by the composition of the above mentioned patent does not provide the fast building possible with presently available builders, and detergent formulators are always looking to provide improvement on this technology.

US5980580 (Kao, 1999) describes a method of cleaning and a detergent composition comprising particles capable of exerting a delayed alkalizing effect in washing liquid, and capable of increasing the pH of the washing liquid after the water hardness of the washing liquid starts decreasing, wherein the detergent provides a pH value to the washing liquid of 10.6 or greater at 25°C, as measured when clothes are not present in the washing liquid. The present inventors have determined that this method and composition are not sufficient to bring about an improvement in the cleaning performance, as compared to the best available in the present art.

WO 93/22411 discloses a cleaning composition for laundry comprising a builder system for softening the water comprising sodium carbonate, a seed for precipitating calcium carbonate, namely calcite, and a sequestrant immobilised on a high surface area solid support medium.

Thus, the softening methods known and available in the present state of the art are not able to reduce the hardness of water as fast as will be necessary to bring about a more efficient utilisation of the surfactant and thereby bring about better cleaning of soiled fabrics. The present inventors have determined that when a water soluble alkali metal carbonate and a seed for precipitating calcium carbonate is used along with a sequestrant selected from a specific class of acids wherein the sequestrant is dissolved in a delayed mode as compared to the other builder compounds, the building kinetics is vastly enhanced thereby giving enhanced cleaning of soiled fabrics.

It is thus an object of the present invention to provide for a method softening of hard water which is more efficient as compared to methods available in the present state of the art.

It is another object of the present invention to provide for a builder composition for use in a detergent composition that provides for faster building of hard water as compared to similar systems available in the prior art.

It is yet another object of the present invention to provide for a detergent composition that comprises a faster

building composition that provides equal or better cleaning of soiled fabrics as compared to prior art compositions especially when cleaned in hard water conditions.

## SUMMARY OF THE INVENTION

According to the first aspect of the present invention there is provided a method for softening of water comprising dissolving/dispersing a water soluble alkali metal carbonate, a seed for precipitating calcium carbonate, a sequestrant selected from amino polycarboxylic acid, amino polyphosphonic acid, nitrilo triacetic acid or salts thereof; wherein the sequestrant is in the form of granules having a particle size of 0.5 to 1.7 mm so as to achieve delayed dissolution such that not more than 20 wt% of the sequestrant dissolves in the water in the first 30 seconds after the dissolution/dispersion of said water soluble alkali metal carbonate and said seed for precipitating calcium carbonate.

According to a second aspect of the present invention there is provided a builder composition for use in a detergent composition comprising (i) a water soluble alkali metal carbonate; (ii) a seed for precipitating calcium carbonate; and (iii) a sequestrant selected from amino polycarboxylic acid, amino polyphosphonic acid, nitrilo triacetic acid or salts thereof; wherein said sequestrant is present in the form of granules having a particle size of 0.5 to 1.7 mm so as to achieve delayed dissolution such that when the builder composition is dispersed in water, substantial dissolution of the sequestrant occurs in water at least 30 seconds after addition of said builder composition to the water.

According to yet another aspect of the present invention there is provided a detergent composition comprising a surfactant and a builder composition of the invention.

## DETAILED DESCRIPTION OF THE INVENTION

The invention provides for a method for softening of hard water especially for cleaning of soiled fabrics. The method comprises dissolving/dispersing three materials in the water viz. (i) a water soluble alkali metal carbonate; (ii) a seed for precipitating calcium carbonate in the water and (iii) a sequestrant selected from amino polycarboxylic acid, amino polyphosphonic acid, nitrilo triacetic acid or salts thereof. The method is characterised in that the sequestrant is in the form of granules having a particle size of 0.5 to 1.7 mm so as to achieve delayed dissolution such that a substantial portion of the sequestrant dissolves in the water at least 30 seconds after the water soluble alkali metal carbonate and the seed for precipitating calcium carbonate are dissolved/dispersed in the water.

Amino polycarboxylic acids are compounds that have the formula:

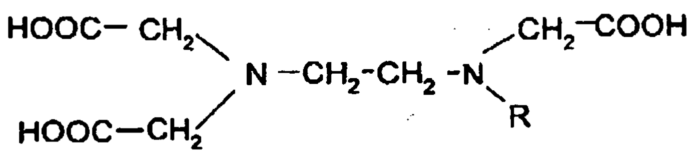

In the above formula, when R is $-CH_2-COOH$ then the compound is ethylene diamine tetraacetic acid (EDTA) .

When R is

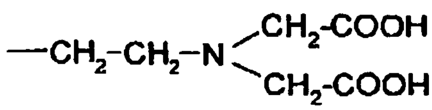

then the compound is diethylene triamine pentaacetic acid.

Amino polyphosphonic acids are compounds that have the formula:

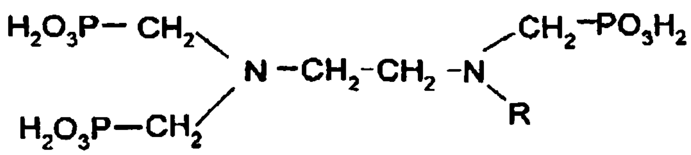

In the above formula, when R is $-CH_2-PO_3H_2$ then the compound is ethylene diamine tetramethyl phosphonic acid. This compound is available under the brand name DEQUEST 204™.

In the above formula when R is

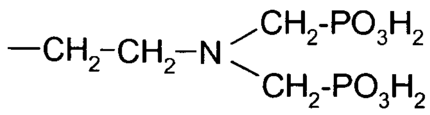

Then the compound is diethylene triamine pentamethyl phosphonic acid. This compound is available under the brand name DEQUEST 206™.

Nitrilo triacetic acid has the chemical formula $C_6H_9NO_6$ and is also known as amino triacetic acid.

Preferably not more than 10%, further more preferably not more than 5% of the sequestrant dissolves in the water in the first 30 seconds, more preferably in the first 45 seconds after the water soluble alkali metal carbonate and said seed for precipitating calcium carbonate are dissolved/dispersed in the water. It is also possible that the sequestrant is manually or through the use of machines added to the wash liquor only after 30 seconds of the dissolution of the water soluble alkali metal carbonate and said seed for precipitating calcium carbonate. Examples of suitable sequestrants are sodium or potassium salt of ethylenediamine tetraacetic acid, diethylenetriamine pentaacetic acid, ethylenediamine tetramethyl phosphonic acid or diethylenetriamine pentamethyl phosphonic acid.

The method of the invention works best when the sequestrant is added to the wash liquor containing the soiled clothes in amount such that the final concentration thereof is in the range of 2 to 100 ppm, preferably from 10 to 75 ppm, further more preferably from 25 to 50 ppm by weight of the wash liquor.

The method of the invention requires a water soluble alkali metal carbonate to be dissolved in the water used for cleaning the soiled fabrics. The alkali metal is preferably sodium or potassium, sodium being preferred. Thus the most preferred alkali metal carbonate is sodium carbonate. The method of the invention works best when the water soluble alkali metal carbonate is dissolved in water at a concentration in the range of 0.3 to 2 grams per litre (gpl), preferably from 0.5 to 1.5 gpl, more preferably from 0.8 to 1.2 gpl.

The method of the invention requires a seed for precipitating calcium carbonate to be dissolved/dispersed in the water used for cleaning the soiled fabrics. By seed for precipitating calcium carbonate is meant a compound which has the ability to act as a seed for precipitation of calcium carbonate in aqueous media. The seed for precipitating calcium carbonate is a substantially water insoluble particulate material. This water insoluble particulate material may be present in the builder composition/detergent composition or generated insitu when the builder composition/detergent composition is dispersed in water. The more preferred aspect provides for the substantially water insoluble particulate material to be present in the builder composition/ detergent composition. Examples of seed for precipitating calcium carbonate which is generated insitu include generation of particulate zinc oxide by including sodium zincate in the detergent composition, generation of particulate alumina by including sodium aluminate or generation of silica by including alumino silicate in the detergent composition. Suitable substantially water insoluble particulate material which may be present in the builder composition/ detergent composition are silica, zinc oxide, aluminium oxide, titanium oxide, zeolite, magnesium oxide or calcium carbonate. Particularly preferred substantially water insoluble particulate material is calcium carbonate. Calcium carbonate may be calcite, or aragonite, most preferably calcite. Calcite is preferably high surface area calcite. Preferably the water insoluble particulate carbonate seed crystal has a surface area greater than 18 $m^2/g$, more preferably greater then 30 $m^2/g$, most preferably greater than 60 $m^2/g$. The method works best when the seed for precipitating calcium carbonate is dispersed in water at a concentration in the range of 0.1 to 1 gpl, preferably from 0.3 to 0.8 gpl, further more preferably from 0.4 to 0.6 gpl.

The method of the invention ensures that the $Ca^{2+}$ ion concentration in input hard water reduces from about 200 ppm to less than 0.75 ppm in less than a minute, and in optimal conditions to less than 0.3 ppm in less than a minute. The method of the invention has the advantage that it enables use of significantly less amount of conventional builders like the water soluble carbonate and the seed for precipitating calcium carbonate. Thus the method also enables reduced fabric encrustation during washing. According to a preferred aspect of the present invention there is provided a method of cleaning a fabric comprising contacting the soiled fabric with water which has been built by the method of the invention, the water additionally comprising a surfactant. The surfactant is any surfactant known and used for cleaning application. Surfactants maybe of the anionic, non-ionic, cationic, amphoteric and zwitterionic type. Most suitable are the ones which are widely available and inexpensive types e.g. anionic surfactants. Suitable anionic synthetic detergents are linear alkyl benzene sulphonates, alpha olefin sulphonates and primary alkyl sulphates. Linear alkyl benzene sulphonates (LAS) are ideally suited since they are the most widely and inexpensively available and have very good surfactant action. Sodium or magnesium salts of LAS acids may be used. The method of the invention works better when the surfactant is delivered in a delayed mode with respect to the water soluble alkali metal carbonate and the seed for precipitating calcium carbonate. It is preferred that the surfactant is in dissolved state 15 to 600 seconds, more preferably 30 to 480 seconds, further more preferably 45 to 300 seconds after the water has been built by the method of the invention. In this respect, the present inventors prefer the surfactant to be magnesium salt of linear alkyl benzene sulphonic acid.

According to a second aspect of the present invention there is provided a builder composition for use in a detergent composition comprising (i) a water soluble alkali metal carbonate; (ii) a seed for precipitating calcium carbonate; and (iii) a sequestrant selected from amino polycarboxylic acid, amino polyphosphonic acid, nitrilo triacetic acid or salts thereof wherein said sequestrant is present in a delayed release form such that when the builder composition is dispersed in water, substantial dissolution of the sequestrant occurs in water at least 30 seconds after addition of said builder composition to the water. In a preferred mode, the builder composition ensures that substantial dissolution of the sequestrant in water occurs 45 seconds after addition of the builder composition to the water. The delayed dissolution of the sequestrant is achieved by formulating the builder composition with granules of the sequestrant having a particle size in the range of 0.5 to 1.7 mm. The most suitable sequestrants in the builder composition of the invention are disodium salt of ethylenediamine tetraacetic acid (EDTA) or trisodium salt of diethylenetriamine pentaacetic acid (DTPA). The sequestrant is preferably present in 0.2 to 5%, preferably from 0.4 to 2%, more preferably from 0.5 to 1% by weight of the builder composition.

The builder composition of the invention preferably comprises alkali metal carbonate in the range of 10 to 90 % by weight of the builder composition. The builder composition of the invention preferably comprises the seed for precipitating calcium carbonate in the range of 5 to 50 % by weight of the builder composition.

The preferred sequestrants are disodium salts of EDTA or the trisodium salts of DTPA. Preferred particle size of the sequestrants is in the range of 0.85 to 1.7mm. Particle size in this range can be prepared by granulation of fine powders of these salts. In the case of disodium salt of EDTA, the process of granulation was as follows:

Fine powder of disodium salts of EDTA was taken in a pan granulator. Adequate quantity of water was sprayed on the salts with the granulator rotating. Suitable quantity of water was in the range of 2-3 wt%. The granulator was run for about 5 to 10 minutes to form the granules. The granules were then dried in a suitable drier. The granules were sieved to a desired size.

In the case of DTPA, it was found that the trisodium salt was most suitable for incorporation in a solid builder/ detergent composition. Higher alkali metal salts were found to be in the liquid state and difficult to incorporate in solid systems. Thus the procedure for preparation of granules involved taking the acid form of DTPA in a pan granulator. Adequate amount of water (about 5 -6 wt%) was sprayed on to the solid with the granulator rotating. Sodium carbonate in slight excess of carefully calculated stoichiometric amount to form the trisodium salt was added to ensure full conversion to trisodium salt. The granulator was run for about 5 to 10 minutes to form the granules. The granules were then dried in a suitable drier. The granules were sieved to a desired size.

According to yet another aspect of the invention there is provided a detergent composition comprising the builder composition of the invention and a surfactant. The builder composition is preferably present in an amount in the range of 5 to 80% by weight of the detergent composition. The surfactant is preferably present in 5 to 90%, preferably 10 to 50%, more preferably 15 to 35% by weight of the detergent composition. Suitable surfactants are sodium or magnesium salt of linear alkyl benzene sulphonic acid, magnesium salt being preferred. The detergent composition is preferably in the solid form e.g. in the powder, granule, bar or tablet form. The more preferred form of the detergent composition is the powder or granule form. When magnesium salt of LAS is used in a granule form of the detergent composition, it is preferably present as granules in the size range of 0.3mm to 2mm, more preferably in the size range of 0.5 to 2mm.

The water soluble alkali metal carbonate is preferably present in 10 to 70%, more preferably 15 to 60%, and further more preferably 25 to 50% by weight of the detergent composition. The seed for precipitating calcium carbonate is preferably present in an amount in the range of 3 to 50%, more preferably from 5 to 40%, most preferably from 10 to 30% by weight of the detergent composition.

The invention will now be illustrated with respect to the following non-limiting examples.

**Examples:**

Building of various builder systems as per the invention (Examples 1, 2) and outside the invention (A to D)

Experiments were conducted on the various builder compositions as shown in Table -1, as per the following procedure to study the building efficacy.

100 cc of hard water of 48FH i.e having 196 ppm of $Ca^{2+}$ ions was taken in a glass beaker. To this solution various combinations of building materials (sodium carbonate and calcite) were added. In all experiments, i.e. both when the sequestrant was added as a solution and as granules, all of them viz. sodium carbonate, calcite and the sequestrant were added together. The solution was stirred for 30 sec using a glass rod. A sample was withdrawn with the help of a syringe 60 seconds after the addition of the builders, and filtered through a microfilter into the conical flask (2 cc). The $Ca^{2+}$ ion concentration was determined by EDTA titration as shown below:

Measurement of Calcium ion concentration

The method involved titration with EDTA (disodium salt of elthylene diamine tetra acetic acid) using EBT (Eriochrome Black - T) as indicator. About 2 ml of the Calcium ion solution was pipetted out into a 150 ml conical flask. The solution was diluted using about 10 ml water. To this was added 5 ml of ammonia-ammonium chloride pH 10 buffer. About 35 mg of 1% EBT in potassium nitrate solution was added. A wine red colour was obtained. A standardized EDTA solution was added dropwise from a burette with constant stirring. As more EDTA was added the colour gradually changed from wine red to violet. The end point was identified by a sudden colour change from violet to blue. The calcium ion concentration was calculated using the formula:

The $Ca^{2+}$ concentration in terms of FH was calculated using the formula:

$Ca^{2+}$ ion concentration = vol of EDTA * strength of EDTA/ vol of calcium solution taken.

$Ca^{2+}$ ion concentration in FH = ($Ca^{2+}$ ion concentration in ppm)/4.

In the table below,

EDTA refers to Disodium salt of ethylene diamine tetra acetic acid. DTPA refers to trisodium salt of diethylene triamine pentaacetic acid.

When EDTA granules were used, the particle size was in the range of 0.5 to 1.7 mm. When DTPA granules were used, the particle size was in the range of 0.5 to 1.7 mm.

**Table - 1**

| Ex. | Sodium Carbonate, gpl | Calcite gpl | Sequestrant, | Sequestrant, ppm | Form of sequestrant | Delay, Seconds | [Ca2+] ppm |
|---|---|---|---|---|---|---|---|
| A | 1.5 | 0.75 | - | - | - | - | 5.20 |
| B | 1.5 | 0.50 | - | - | - | - | 4.80 |
| C | 1.5 | 0.50 | EDTA | 30 | Solution | - | 4.40 |
| 1 | 1.5 | 0.50 | EDTA | 50 | Granules | - | 0.28 |
| D | 1.5 | 0.50 | DTPA | 50 | Solution | - | 6.00 |
| 2 | 1.5 | 0.50 | DTPA | 50 | Granules | - | 0.68 |

The data in Table 1 indicates that the building is faster and better when a builder composition or a method of building as per the invention is used as compared to those examples outside the invention.

Effect of particle size on the building as per the invention (Examples 3 to 7) and outside the invention (Examples E to H)

Experiments were conducted as per the conditions listed in Table - 2 using the procedure as used for the experiments carried out in Table -1.

The [$Ca^{2+}$] ion concentration was measured 60 seconds after the addition of the builder composition and the result is summarized in Table- 2.

**Table - 2**

| Ex. | Sodium Carbonate gpl | Calcite gpl | Sequestrant, | Sequestrant, ppm | Particle size, mm | [Ca2+] ppm |
|---|---|---|---|---|---|---|
| E | 1.5 | 0.50 | DTPA | 30 | 0.075 to 0.15 | 4.80 |
| F | 1.5 | 0.50 | DTPA | 30 | > 1.7 | 4.80 |
| 3 | 1.5 | 0.50 | DTPA | 30 | 0.85 to 1.7 | 0.28 |

(continued)

| Ex. | Sodium Carbonate gpl | Calcite gpl | Sequestrant, | Sequestrant, ppm | Particle size, mm | [Ca2+] ppm |
|---|---|---|---|---|---|---|
| 4 | 1.1 | 0.75 | DTPA | 30 | 0.85 to 1.7 | 0.28 |
| G | 1.5 | 0.50 | EDTA | 30 | 0.075 to 0.15 | 4.0 |
| H | 1.5 | 0.50 | EDTA | 30 | >1.7 | 4.0 |
| 5 | 1.5 | 0.50 | EDTA | 30 | 0.85 to 1.7 | 0.28 |
| 6 | 1.1 | 0.75 | EDTA | 30 | 0.85 to 1.7 | 0.28 |
| 7 | 1.1 | 0.55 | EDTA | 50 | 0.85 to 1.7 | 1.32 |

The data in Table - 2 indicates that builder compositions containing sequestrant granules having a particle size according to the invention provide better building performance.

Effect of addition of the components of the builder composition in different order (Examples I to K)

The components of the builder composition were added in various other orders and the data on [$Ca^{2+}$] ion concentration was measured 60 seconds after the addition of the first component. The data is summarised in Table - 3.

Example - I: The mixture of Sodium carbonate and DTPA granules were dissolved in water.

Example - J: DTPA was first dissolved in water completely before the sodium carbonate and calcite were added. Example - K: DTPA was first dissolved in water completely before the sodium carbonate was added.

**Table - 3**

| Ex. | Sodium Carbonate gpl | Calcite gpl | Sequestrant, | Sequestrant, ppm | [Ca2+] ppm |
|---|---|---|---|---|---|
| I | 1.5 | - | DTPA | 50 | 34.0 |
| J | 1.5 | 0.50 | DTPA | 50 | 24.0 |
| K | 1.5 | 0.50 | DTPA | 50 | 32.8 |

The data in Table - 3 indicates that order of addition of the various components is important and order of addition other than that of the invention gives poor building.

Detergency benefit in using the builder composition of the invention (Examples 8, 9) and builder composition in conventional detergents (Examples L & M)

Cleaning experiments were carried out using the formulations as shown in Table - 4 using the following procedure A 48 FH water was taken and the detergent composition was added to it and stirred in a tergo-to-meter at 90 rpm for about 5 minutes. The fabric test monitors were then added. The solution was allowed to stand for 15 minutes after which it was stirred for 30 minutes to simulate a washing machine wash cycle. The test monitors were then rinsed two times at a liquid to cloth ratio of 20 and then dried. The reflectance's of the monitors were then measured. Average of reflectance data on different monitors was taken.

LAS refers to sodium salt of linear alkyl benzene sulphonic acid.

**Table - 4**

| Ex. | NaLAS, Gpl | Sodium Carbonate, gpl | Calcite gpl | STPP, Gpl | Sequestrant, | Sequestrant, ppm | Particle size, mm |
|---|---|---|---|---|---|---|---|
| 8 | 0.7 | 1.1 | 0.75 | - | EDTA | 50 | 0.85 to 1.7 |
| L | 0.69 | 0.87 | 0.06 | 1.02 | - | - | - |
| 9 | 0.7 | 1.1 | 0.75 | - | DTPA | 50 | 0.85 to 1.7 |
| M | 0.64 | 1.4 | 0.87 | 0.16 | - | - | - |

The data on the cleaning in terms of ΔR as measured using the following procedure is summarised in Table - 5

**Table - 5**

| Ex. | ΔR* 10D | ΔR* 20D |
|---|---|---|
| 8 | 18.1 | 22.7 |
| L | 15.8 | 19.8 |
| 9 | 16.5 | 20.8 |
| M | 14.4 | 17.6 |

The data in Table - 5 indicates that detergent compositions as per the invention provide for improved detergency as compared to conventional detergent compositions.

The invention thus provides for a method of faster and better building of hard water and a builder composition which provides for faster building as compared to methods available in the present state of the art. The invention also provides for a detergent composition that comprises the builder composition of the invention which gives better cleaning of soiled fabrics as compared to prior art compositions especially when cleaned in hard water conditions.

## Claims

1. A method for softening of water comprising dissolving/dispersing a water soluble alkali metal carbonate, a seed for precipitating calcium carbonate, a sequestrant selected from amino polycarboxylic acid, amino polyphosphonic acid, nitrilo triacetic acid or salts thereof; **characterised in that** the sequestrant is in the form of granules having a particle size of 0.5 to 1.7 mm so as to achieve delayed dissolution such that not more than 20 wt% of the sequestrant dissolves in the water in the first 30 seconds after the dissolution/dispersion of said water soluble alkali metal carbonate and said seed for precipitating calcium carbonate.

2. A method as claimed in claim 1 wherein not more than 20% of said sequestrant dissolves in the water in the first 45 seconds after said water soluble alkali metal carbonate and said seed for precipitating calcium carbonate are dissolved/dispersed in said water.

3. A method as claimed in claim 1 or 2 wherein said sequestrant is selected from sodium or potassium salt of ethylenediamine tetraacetic acid, diethylenetriamine pentaacetic acid, ethylenediamine tetramethyl phosphonic acid or diethylenetriamine pentamethyl phosphonic acid.

4. A method as claimed in any one of the preceding claims wherein the sequestrant is dissolved in the water in a final concentration from 2 to 100 ppm by weight.

5. A method as claimed in any one of the preceding claims wherein said water soluble alkali metal carbonate is dissolved in water at a concentration in the range of 0.3 to 2 grams per liter.

6. A method as claimed in any one of the preceding claims wherein said seed for precipitating calcium carbonate is dispersed in water at a concentration in the range of 0.1 to 1 gpl.

7. A method of cleaning a fabric comprising contacting said fabric with water built by a method as claimed in any one of the preceding claims wherein the water comprises a surfactant.

8. A method as claimed in claim 7 wherein said surfactant dissolves 15 to 600 seconds after said water soluble alkali metal carbonate and said seed for precipitating calcium carbonate dissolves/disperses in said water.

9. A builder composition for use in a detergent composition comprising (i) a water soluble alkali metal carbonate; (ii) a seed for precipitating calcium carbonate; and (iii) a sequestrant selected from amino polycarboxylic acid, amino polyphosphonic acid, nitrilo triacetic acid or salts thereof; **characterised in that** said sequestrant is present in the form of granules having a particle size of 0.5 to 1.7 mm so as to achieve a delayed release form such that when the builder composition is dispersed in water, substantial dissolution of the sequestrant occurs in water at least 30 seconds after addition of said builder composition to the water.

**10.** A builder composition as claimed in claim 9, wherein said alkali metal carbonate is present in an amount in the range of 10 to 90 % by weight of the builder composition.

**11.** A builder composition as claimed in claim 9 or 10, wherein said seed for precipitating calcium carbonate is present in 5 to 50% by weight of the builder composition.

**12.** A builder composition as claimed in any one of the preceding claims 9 to 11, wherein said sequestrant is present in a concentration of 0.2 to 5% by weight of the builder composition.

**13.** A detergent composition comprising a surfactant and a builder composition as claimed in any one of the preceding claims 9 to 12.

**14.** A detergent composition as claimed in claim 13, wherein said builder composition is present in an amount in the range of 5 to 80% by weight of the detergent composition.

**Patentansprüche**

**1.** Verfahren zum Weichmachen von Wasser, das Lösen/Dispergieren eines wasserlöslichen Alkalimetallcarbonats, eines Impfkristalls zum Präzipitieren von Calciumcarbonat, eines Sequestriermittels, ausgewählt aus Aminopolycarbonsäure, Aminopolyphosphonsäure, Nitrilotriessigsäure oder Salzen davon, umfasst, **dadurch gekennzeichnet, dass** das Sequestriermittel in der Form von Körnern ist, die eine Partikelgröße von 0,5 bis 1,7 mm haben, um so eine derartige verzögerte Lösung zu erreichen, dass nicht mehr als 20 Gew.-% des Sequestriermittels sich in dem ersten 30 Sekunden nach der Lösung/Dispersion des wasserlöslichen Alkalimetallcarbonats und des Impfkristalls zum Präzipitieren von Calciumcarbonat in Wasser lösen.

**2.** Verfahren, wie es in Anspruch 1 beansprucht ist, wobei sich nicht mehr als 20 % des Sequestriermittels in den ersten 45 Sekunden, nachdem das wasserlösliche Alkalimetallcarbonat und der Impfkristall zum Präzipitieren von Calciumcarbonat in dem Wasser gelöst/dispergiert wurden, in dem Wasser lösen.

**3.** Verfahren, wie es in Anspruch 1 oder 2 beansprucht ist, wobei das Sequestriermittel aus Natrium- oder Kaliumsalz von Ethylendiamintetraessigsäure, Diethylentriaminpentaessigsäure, Ethylendiamintetramethylphosphonsäure oder Diethylenztiaminpentamethylphosphonsäure ausgewählt wird.

**4.** Verfahren, wie es in einem der vorangehenden Ansprüche beansprucht ist, wobei das Sequestriermittel mit einer Endkonzentration von 2 bis 100 Gew.-ppm in Wasser gelöst wird.

**5.** Verfahren, wie es in einem der vorangehenden Ansprüche beansprucht ist, wobei das wasserlösliche Alkalimetallcarbonat mit einer Konzentration im Bereich von 0,3 bis 2 Gramm pro Liter in Wasser gelöst wird.

**6.** Verfahren, wie es in einem der vorangehenden Ansprüche beansprucht ist, wobei der Impfkristall zum Präzipitieren von Calciumcarbonat mit einer Konzentration im Bereich von 0,1 bis 1 gpl in Wasser dispergiert wird.

**7.** Verfahren zum Reinigen eines Gewebes, umfassend In-Kontakt-Bringen des Gewebes mit Wasser, das durch ein Verfahren, wie es in einem der vorangehenden Ansprüche beansprucht ist, aufgebaut ist, wobei das Wasser ein Tensid umfasst.

**8.** Verfahren, wie es in Anspruch 7 beansprucht ist, wobei das Tensid sich 15 bis 600 Sekunden, nachdem das wasserlösliche Alkalimetallcarbonat und der Impfkristall zum Präzipitieren von Calciumcarbonat sich in Wasser gelöst/dispergiert haben, löst.

**9.** Builder-Zusammensetzung zu Verwendung in einem Waschmittel, umfassend (i) ein wasserlösliches Alkalimetallcarbonat; (ii) einen Impfkristall zum Präzipitieren von Calciumcarbonat und (iii) ein Sequestriermittel, ausgewählt aus Aminopolycarbonsäure, Aminopolyphosphonsäure, Nitrilotriessigsäure oder Salzen davon, **dadurch gekennzeichnet, dass** das Sequestriermittel in der Form von Körnern vorliegt, die eine Partikelgröße von 0,5 bis 1,7 mm haben, um so eine derartige Form mit verzögerter Freisetzung zu erreichen, dass, wenn die Builder-Zusammensetzung in Wasser dispergiert wird, eine substantielle Lösung des Sequestriermittels in Wasser wenigstens 30 Sekunden nach Zugabe der Builder-Zusammensetzung zu dem Wasser erfolgt.

10. Builder-Zusammensetzung, wie sie in Anspruch 9 beansprucht ist, wobei das Alkalimetallcarbonat in einer Menge im Bereich von 10 bis 90 Gew.-% der Builder-Zusammensetzung vorliegt.

11. Builder-Zusammensetzung, wie sie in Anspruch 9 oder 10 beansprucht ist, wobei der Impfkristall zum Präzipitieren von Calciumcarbonat mit 5 bis 50 Gew.-% der Builder-Zusammensetzung vorliegt.

12. Builder-Zusammensetzung, wie sie in einem der vorangehenden Ansprüche 9 bis 11 beansprucht ist, wobei das Sequestriermittel mit einer Konzentration von 0,2 bis 5 Gew.-% der Builder-Zusammensetzung vorliegt.

13. Waschmittel, umfassend ein Tensid und eine Builder-Zusammensetzung, wie sie in einem der vorangehenden Ansprüche 9 bis 12 beansprucht ist.

14. Waschmittel, wie es in Anspruch 13 beansprucht ist, wobei die Builder-Zusammensetzung in einer Menge im Bereich von 5 bis 80 Gew.-% des Waschmittels vorliegt.

**Revendications**

1. Méthode destinée à adoucir l'eau comprenant la dissolution/dispersion d'un carbonate de métal alcalin soluble dans l'eau, un germe pour précipiter le carbonate de calcium, un séquestrant choisi parmi l'acide aminopolycarboxylique, l'acide aminopolyphosphonique, l'acide nitrilotriacétique ou des sels de ceux-ci ; **caractérisée en ce que** le séquestrant apparaît sous la forme de granulés dont la taille des particules va de 0,5 à 1,7 mm afin de réaliser une dissolution retardée de telle sorte que pas plus de 20 % en poids du séquestrant se dissolve dans l'eau dans les 30 premières secondes après la dissolution/ dispersion dudit carbonate de métal alcalin soluble dans l'eau et dudit germe pour précipiter le carbonate de calcium.

2. Méthode selon la revendication 1, dans laquelle pas plus de 20 % dudit séquestrant se dissout dans l'eau dans les 45 premières secondes après la dissolution/dispersion dans ladite eau dudit carbonate de métal alcalin soluble dans l'eau et dudit germe pour précipiter le carbonate de calcium.

3. Méthode selon la revendication 1 ou 2, dans laquelle ledit séquestrant est choisi parmi le sel de sodium ou de potassium de l'acide éthylène diamine tétraacétique, l'acide diéthylène triamine pentaacétique, l'acide éthylène diamine tétra-méthyl phosphonique ou l'acide diéthylène triamine pentaméthyl phosphonique.

4. Méthode selon l'une quelconque des revendications précédentes, dans laquelle le séquestrant est dissous dans l'eau à une concentration finale allant de 2 à 100 ppm par poids.

5. Méthode selon l'une quelconque des revendications précédentes, dans laquelle ledit carbonate de métal alcalin soluble dans l'eau est dissous dans l'eau à une concentration située dans la plage allant de 0,3 à 2 grammes par litre.

6. Méthode selon l'une quelconque des revendications précédentes, dans laquelle ledit germe pour précipiter le carbonate de calcium est dispersé dans l'eau à une concentration située dans la plage allant de 0,1 à 1 g/l.

7. Méthode de nettoyage d'un tissu comprenant la mise en contact dudit tissu avec de l'eau constituée par une méthode selon l'une quelconque des revendications précédentes, dans laquelle l'eau comprend un agent tensio-actif.

8. Méthode selon la revendication 7, dans laquelle ledit agent tensio-actif se dissout 15 à 600 secondes après que ledit carbonate de métal alcalin soluble dans l'eau et ledit germe pour précipiter le carbonate de calcium se sont dissous/ dispersés dans ladite eau.

9. Composition d'adjuvant destinée à être utilisée dans une composition détergente comprenant (i) un carbonate de métal alcalin soluble dans l'eau ; (ii) un germe pour précipiter le carbonate de calcium ; et (iii) un séquestrant choisi parmi l'acide aminopolycarboxylique, l'acide aminopolyphosphonique, l'acide nitrilotriacétique ou des sels de ceux-ci ; **caractérisée en ce que** ledit séquestrant est présent sous la forme de granulés ayant une ganulométrie de 0,5 à 1,7 mm afin d'obtenir une forme à libération retardée de telle sorte que lorsque la composition d'adjuvant est dispersée dans l'eau, une dissolution importante du séquestrant se produit dans l'eau au moins 30 secondes après l'ajout de ladite composition d'adjuvant à l'eau.

**10.** Composition d'adjuvant selon la revendication 9, dans laquelle ledit carbonate de métal alcalin est présent en une quantité située dans la plage allant de 10 à 90 % en poids de la composition d'adjuvant.

**11.** Composition d'adjuvant selon la revendication 9 ou 10, dans laquelle ledit germe pour précipiter le carbonate de calcium est présent dans 5 à 50 % en poids de la composition d'adjuvant.

**12.** Composition d'adjuvant selon l'une quelconque des revendications précédentes 9 à 11, dans laquelle ledit séquestrant est présent à une concentration de 0,2 à 5 % en poids de la composition d'adjuvant.

**13.** Composition détergente comprenant un agent tensio-actif et une composition d'adjuvant selon l'une quelconque des revendications précédentes 9 à 12.

**14.** Composition détergente selon la revendication 13, dans laquelle ladite composition d'adjuvant est présente en une quantité située dans la plage allant de 5 à 80 % en poids de la composition détergente.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5496376 A, Church & Dwight
- US 5980580 A, Kao
- WO 9322411 A